# EUROPEAN PATENT SPECIFICATION

(11) **EP 2 584 479 B1**
(45) Date of publication and mention of the grant of the patent: **18.07.2018**
(21) Application number: 12188054.6
(22) Date of filing: 10.10.2012
(51) Int. Cl.: G06F 17/30

(54) **Synchronization method and associated apparatus**
Synchronisationsverfahren und zugehörige Vorrichtung
Procédé de synchronisation et appareil associé

(30) Priority: 17.10.2011 US 201161547817 P; 07.03.2012 US 201213414477
(43) Date of publication of application: 24.04.2013
(73) Proprietor: BlackBerry Limited, Waterloo, ON N2K 0A7 (CA)
(72) Inventor: Ewanchuk, Andrew John, Waterloo, Ontario N2L 3W8 (CA); May, Darrell Reginald, Waterloo, Ontario N2L 3W8 (CA); Cherry, Carl Lloyd, Waterloo, Ontario N2T 2S2 (CA)
(74) Representative: Fennell, Gareth Charles

(56) References cited:
- US-A1- 2009 187 622
- US-B1- 6 477 545
- ANONYMOUS: "Identity Manager Driver for LDAP 3.5.1", NOVELL IMPLEMENTATION GUIDE, 15 October 2007 (2007-10-15), pages 1-117, XP002691402, Retrieved from the Internet: URL:http://www.novell.com/documentation/id m35drivers/pdfdoc/ldap/ldap.pdf [retrieved on 2013-01-31]
- MICHAEL P ARMIJO MICROSOFT CORPORATION: "Microsoft LDAP Control for Directory Synchronization; draft-armijo-ldap-dirsync-01.txt", 19991112, no. 1, 12 November 1999 (1999-11-12), XP015010295, ISSN: 0000-0004

## Description

The present disclosure relates generally to a manner by which to synchronize data of a database, such as messages of a message database. More particularly, the present disclosure relates to an apparatus, and an associated method, by which to cause ordering of the synchronization data that is provided to the database undergoing synchronization.

A synchronization request is generated that causes recent data entries of the synchronization data, such as message entries of recent date, to be provided prior to providing synchronization data of less recent date.

### Background

Communication networks of many varied types have been developed and deployed to provide for the communication of data. Various of such communication networks provide for communication by way of wired connection with communication stations, and other communication networks provide for communication by way of radio connections. Interconnectivity between networks provides for communication between communication stations connected to different communication networks.

For many, access to mobile and other radio communication systems is a necessary aspect of daily life. Cellular, and other analogous, radio communication systems, for instance, have been installed that encompass significant portions of the populated areas of the world. Communications are typically carried out in such systems through use of a portable wireless device that includes transceiver circuitry, which is permitting of communication with the network of the communication system.

While portable wireless devices were first generally constructed primarily to provide voice communication services and provided only limited other functionalities, portable wireless devices often times are now constructed to provide data-intensive data communication services. Email, or other messaging, services are exemplary of a data communication service. Such messaging, as well as other data, services often times utilize a database at which data is stored, available for subsequent retrieval.

Other devices, including devices that do not include radio transceiver circuitry, also provide for data storage and processing functionalities in which databases are created or otherwise utilized or manipulated. Several types of personal digital assistants (PDAs), for instance, are capable of storing and manipulating database data. Howsoever implemented, the data stored at a database of a device is formatted according to a formatting scheme, typically a scheme in which a series of data records or entries are defined in which each data record or entry contains one or more data fields.

Back-up of the data at a remote location permits recovery of the data in the event that the data is corrupted or lost at the device. Additionally, the device might be a new or replacement device whose database does not contain a complete set of data records. A back-up copy of the database permits a corresponding database at the device to be recreated or otherwise placed in match with the back-up copy pursuant to a synchronization process.

While conventional mechanisms are available by which to synchronize databases, operational constraints inherent in the synchronization mechanisms sometime cause synchronization to be carried out in a less than ideal manner. For instance, an ActiveSync ™ protocol is sometimes utilized to synchronize Exchange ™ message data of an exchange database. Operability is constrained either, or both, at the server implementation of the ActiveSync protocol and the operational specification of the protocol. By way of an example, when synchronization is performed upon the data records of a mail box there is conventionally no manner by which to control the order in which messages, i.e., the data records, are retrieved. The oldest messages, which are generally of lesser importance and, hence, of lesser priority, are provided and synchronized prior to more recent messages, which are typically of higher priority. If the mail box includes a large number of messages, a significant delay might occur prior to synchronization of the mail box. A user of a device having the database that is undergoing synchronization is required to wait until the messages of interest are synchronized.

"Identity Manager Driver for LDAP 3.5.1", Novell Implementation Guide, 15 October 2007 relates to an Identity Manager Driver for LDAP 3.5.1 that synchronizes data between an Identity Vault and LDAP-compliant directories.

Various challenges, therefore, remain, with respect to synchronization of databases.

It is in light of this background information that the significant improvements of the present disclosure have evolved.

Aspects of an invention are set forth in the appended independent claims.

### Brief Description of the Drawings

Figure 1 illustrates a communication system in which an exemplary embodiment of the present disclosure is operable.
Figure 2 illustrates a message sequence diagram representative of signaling generated pursuant to operation of an implementation of the present disclosure.
Figure 3 illustrates a functional block diagram of an exemplary device that is operable pursuant to an implementation of the present disclosure.
Figure 4 illustrates a process diagram representative of the process of operation of an exemplary implementation of the present disclosure.
Figure 5 illustrates a method flow diagram representative of the method of operation of an implementation of the present disclosure.

### Detailed Description

The present disclosure, accordingly, advantageously provides an apparatus, and an associated method, by which to synchronize data of a database, such as messages of a message database, with data stored at a copy of the database.

Through operation of an implementation of the present disclosure, a manner is provided by which to cause ordering of the synchronization data that is provided to the database undergoing synchronization.

In one aspect of the present disclosure, recent data entries of the synchronization data, such as message data of more-recent date, is caused to be provided prior to providing synchronization data of less recent date.

In another aspect of the present disclosure, a synchronization request is initiated at a device having a database or at which a database is to be provided with synchronized data. The synchronization request is caused to be generated responsive to a trigger, such as user entry of information, a time-related parameter, or any of various other operational parameters of the device. The user-entered information comprises, for example, a request for synchronization or entry of access information, such as entry of an email identification and a password.

In another aspect of the present disclosure, the synchronization request that is caused to be generated comprises a plurality of synchronization requests including a first synchronization request and at least a second synchronization request. Each synchronization request includes routing information that permits routing of the synchronization request to an appropriate location, such as an endpoint of a server that contains the database having synchronization data. When, for example, a message database is to be synchronized, the synchronization request includes the information identifying the routing information needed to route the synchronization request to the endpoint and also identification of the part of the database, e.g., a particular folder, such as an "in-box" folder, that is to be synchronized.

In another aspect of the present disclosure, the synchronization request also includes a filter-type parameter that identifies the synchronization depth, that is, the time frame or window of synchronization data that is subject of the request. The synchronization depth of a first synchronization request is of a first depth, and a second synchronization request, generated subsequent to the first synchronization request, is of a second depth. The second depth is greater than the first depth. For instance, the first synchronization request is a depth of one day, i.e., including data records having dates between a present time and one previous day. And, for example, the depth requested in the second synchronization request is of a depth of three days, that is, including data records having dates between a present time and three prior days. The second request, if for a significant number of data records, is "chunked", that is, formed of a series of requests in which portions of the requested, synchronization data are returned in "chunks" that, together, comprise the request synchronization data.

In another aspect of the present disclosure, the first synchronization request includes a request for both identifying parts and information parts of the synchronization data. The second synchronization request and, in one implementation, additional synchronization requests, comprise requests for only the identifying parts of the synchronization data.

In another aspect of the present disclosure, synchronization data received in a subsequent synchronization request is reconciled with synchronization data received in an earlier synchronization request. The reconciliation is performed to remove redundant data records of the synchronization data returned responsive to the subsequent synchronization request. While the different synchronization requests include different synchronization windows, the synchronization periods and associated synchronization data include overlapping portions. For instance, when the first synchronization request includes a filter parameter of a one-day synchronization window and the second synchronization request includes a filter parameter of a three-day synchronization window, the returned, synchronization data, returned responsive to the second synchronization request includes the synchronization data falling within the one-day window as well as synchronization data following within the second and third days of the three-day window. The reconciliation identifies the overlapping data records and causes removal of a redundant data record. Reconciliation is performed by comparing the identifying parts of data records of synchronization data returned responsive to the different synchronization requests. Data records identified to be the same are redundant. Deletion of a redundant data record leaves only a single data record identified by the identifying part. Reconciliation also provides for merging of a server synchronization key, which is susceptible to change between the successive synchronization requests.

In another aspect of the present disclosure, an informational-part request is further generated to request the informational parts of synchronization data provided in response to the second, or subsequent, synchronization request. As redundant data records have been deleted, the informational-part requests are for the informational parts of only the non-redundant data records.

In another aspect of the present disclosure, synchronization data provided in response to the first synchronization request is synchronized with corresponding local, if any, data records. During the synchronization of these first-returned data records, or subsequent thereto, the second synchronization request is sent. Only the informational parts of the synchronization data within the depth of the second synchronization request is returned. Redundancies are identified and removed, and an informational request is generated for return of the informational parts of the non-redundant data records within the second, or other subsequent, depth. Synchronization is then performed to this additional depth.

Thereby, a manner is provided by which to control which data records are provided pursuant to synchronization operations through generation of synchronization requests of iteratively greater depths. Database records are synchronized, thereby, commencing with recent data records and, thereafter, less-recent data records.

In these and other aspects, therefore, an apparatus, and an associated method, is provided for facilitating synchronization of a device database. A request generator is configured to generate a synchronization request. The synchronization request includes a first stage-length value. A detector is configured to detect synchronization data provided responsive to the synchronization request. The synchronization data is provided in a first stage of a first stage-length responsive to the first stage-length value and at least a second stage of a second stage-length.

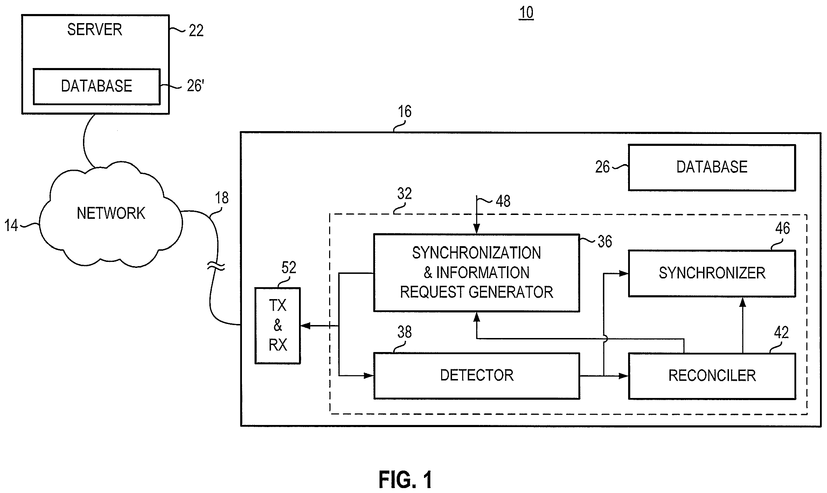

Turning first, therefore, to Figure 1, a communication system 10 comprises a network 14 that provides for data communications. The network is implemented in any desired manner. In one implementation, the network includes a radio part that provides for radio communications, such as cellular or WiFi communications.

Communication entities are placed in communication connectivity with the network 14. Here, a device 16 is placed in communication connectivity with the network by way of communication paths 18. And, a database server 22 is also placed in communication connectivity with the network 14. Communication signals generated by either the device 16 or the database server 22 are routed by way of the network 14. In the exemplary implementation, the device 16 forms a radio device, such as a smart phone or a computing device, e.g., as a tablet computer having radio connectivity. In other implementations, the device 16 is implemented in other manners including, for instance, an implementation in which the device 16 is connected by way of a wired connection to the network 14.

The device 16 includes databases of which the database 26 is representative. The following description shall describe exemplary operation in which the database 26 forms a message database, such as an email database. The database 26 is, however, representative of any of various databases, capable of containing data records. The database server 22 also includes databases of which the database 26' is representative. The database 26' is a back-up copy of the database 26 or otherwise is formed of data records that are intended to be stored at the database 26 of the device 16.

While synchronization operations are performable between databases, conventional schemes are sometimes constrained in the manner by which the synchronization of data is carried out. The constraints are variously due to either or both the implementation of the server 22 and the synchronization mechanism that is utilized. For instance, when an ActiveSync ™ protocol is utilized to synchronize a database with data records of a corresponding database, the synchronization is carried out in which the oldest data records are first synchronized. If a large number of data records are to be synchronized, complete synchronization might take an inordinately lengthy time period. The lengthy time period is particularly problematical if a user of the device at which a database is to be populated pursuant to the synchronization operations must wait to be provided with recent messages, which are provided only after older messages are provided pursuant to the synchronization operation.

Pursuant to an implementation of the present disclosure, the device 16 includes an apparatus 32 that facilitates synchronization of the databases. The apparatus 32 is functionally represented in Figure 1 and is implementable in any appropriate manner including, for instance, by hardware elements, firmware elements, program code executable by processing circuitry, and combinations thereof.

The apparatus 32 is here shown to include a request generator 36, a detector 38, a reconciler 42, and a synchronizer 46.

The request generator operates to generate synchronization requests in response to a triggering event, here indicated to be provided to the generator 36 by way of the line 48. The triggering event comprises, for instance, entry by a user of the device of a user identification and password associated with an email account. Such entry occurs, for instance, when a user adds an email account to the device so that the device is operable to send and to receive messages associated with the account.

In other implementations, other triggering events cause operation of the request generator to generate a synchronization request.

The device 16 also includes transmit and receive elements, here a transceiver 52 that transceives communication systems by way of communication paths 18 formed on a radio air interface.

Responsive to the triggering event, a plurality of synchronization requests, i.e., a first synchronization request and at least a second synchronization request, is generated. The first synchronization request forms a primary synchronization request, and the second synchronization request forms a secondary synchronization request. The first synchronization request, i.e., the synchronization request that is first-generated and sent, includes, in addition to routing information, user credentials, a filter parameter, and an indication that both identifying parts and informational parts of the data records are requested. The filter parameter comprises a synchronization-depth value. The synchronization-depth value identifies the size of the window of synchronization data records that are requested in the synchronization request and which identifies a first stage-length value. Thereby, the filter parameter is determinative of the range of data records that are provided in response to the synchronization request. In the exemplary implementation in which an ActiveSync ™ protocol is utilized, specifications of the protocol define permitted, filter-parameter values. For instance, one-day, three-day, one-week, and one-month synchronization depths or windows are defined. The first synchronization request, generated responsive to the triggering event, includes a filter parameter defining a first synchronization depth, such as a one-day depth. The synchronization request also comprises a request for both identifying parts and informational parts of the data records that are within the requested window or depth. The request is communicated by the transmit part of the transceiver 52 upon a communication path 18, routed through the network 14, and delivered to the server 22. The requested data records are accessed from the database 26' and the records, or information related thereto, are returned to the device 16. The returned information, i.e., the synchronization data, is received by a receive element of the transceiver 52 and detected by the detector 38 in a first stage of the synchronization of the database. The synchronization data is synchronized by the synchronizer 46. Through appropriate selection of the filter parameter of the first synchronization request, the synchronization data provided to the device is of data records within a recent timeframe.

An additional synchronization request is also generated. The additional synchronization request is generated subsequent to the generation of the first synchronization request and, e.g., is generated subsequent to the providing of synchronization data in response to the first synchronization request. The second synchronization request is similar to the first synchronization request but is of a different, and larger, filter parameter than the value contained in the prior synchronization request. When the first synchronization request requests a synchronization depth of one day, the second synchronization request includes a request for a synchronization depth of, e.g., three days. The synchronization request includes a request only for identifying parts of the synchronization data. The second request is caused to be transmitted by the transmit element of the transceiver 52, communicated upon the communication path 18, routed through the network 14, and delivered to the server 22. The requested synchronization data is accessed and returned to the device 16, received by a receive element of the transceiver 52, and detected by the detector 38 in a second stage of the synchronization of the database. Reconciliation is performed by the reconciler 42 in order to remove redundant data-record entries of the received data records. Reconciliation also provides for merging of a server synchronization key, which is susceptible to change between the successive synchronization requests. While the synchronization depths of the different synchronization requests differ and the returned synchronization data, accordingly, also differs, portions of the data records overlap. Redundant ones of the data records are deleted.

The data records returned responsive to the second synchronization request include only identifying parts. While appropriate for purposes of reconciliation to identify redundancies, the non-redundant data records must be obtained to perform synchronization. The request generator further generates an informational request for the informational parts of these non-redundant records. The informational request includes the request for the informational parts of the data records for the synchronization depth of the second synchronization request. The informational request is caused to be transmitted by the transmit element of the transceiver 52, communicated upon the communication path 18, routed through the network 14, and delivered to the server 22. The requested informational data is accessed and returned to the device, received at a receive element of the transceiver 52, detected by the detector 38, and then synchronized by the synchronizer 46.

In the exemplary implementation, further synchronization data is provided only when the data becomes available. If desired, in an alternate implementation, additional synchronization requests are analogously generated to obtain synchronization data of increasingly greater synchronization depths.

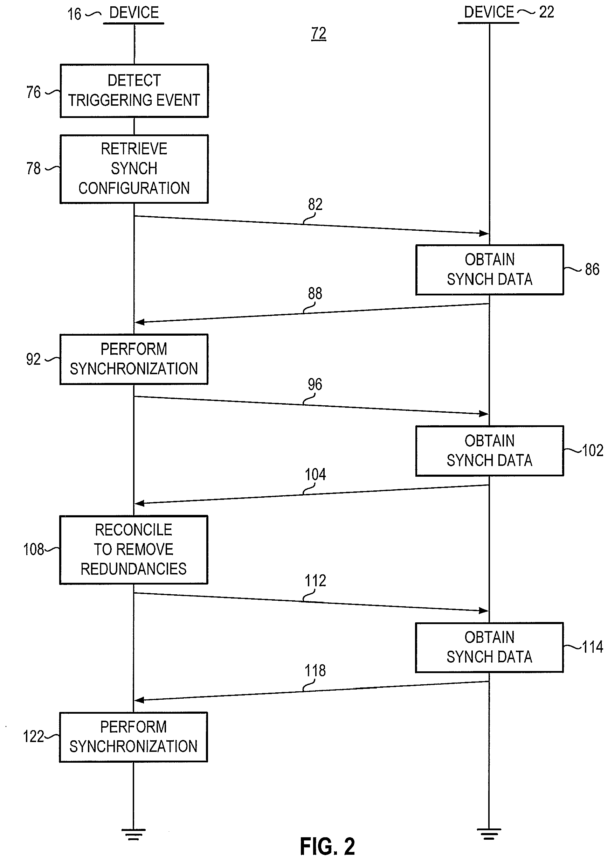

Figure 2 illustrates a sequence diagram 72 representative of exemplary signaling generated pursuant to operation of an implementation of the present disclosure. The signaling is between the device 16 and the server 22 shown in Figure 1. The signaling is also representative of signaling between any of various other sets of communication entities that are placeable in communication connectivity with one another.

At the device 16, a triggering event is detected, indicated by the block 76. Then, and as indicated by the block 78, synchronization configuration information is retrieved. The synchronization configuration information defines the characteristics, and number of, the synchronization requests that are generated to request synchronization data to be provided to the device 16. Here, for example, two synchronization requests, a primary synchronization request and a secondary synchronization request, are configured to be generated wherein the first synchronization request is a request for a synchronization depth of one day, and the synchronization depth of the second synchronization request is of three days.

The first synchronization request is generated and sent, indicated by the segment 82. The first synchronization request includes routing information to route the synchronization request to the server 22, an indication of the filter parameter of a one-day synchronization depth, and an indication that both identifying and informational parts of the data records within the synchronization depth be returned. That is to say, both the header and body parts of the data records are requested.

The request is delivered to the server 22, and the server obtains the requested synchronization data, indicated by the block 86. The requested synchronization data is returned, indicated by the segment 88, and delivered to the device 16. At the device, the returned, synchronization data is used to synchronize the data records, if any, of the local database with the returned, data records. Synchronization operations are indicated at the block 92. Additionally, a second synchronization request is generated and sent, indicated by the segment 96. The second synchronization request includes routing information, a second filter parameter, here a three-day synchronization depth value, and a request for identifying information of the data records within the synchronization-depth parameters.

The request is routed to the server 22, and, once received, the server 22 obtains the requested synchronization data, indicated by the block 102. The requested, synchronization data, once obtained, is provided, here indicated by the segment 104, to the device 16. The device reconciles, indicated by the block 108, the synchronization data returned responsive to the first and second synchronization requests to remove redundancies. Here, redundant data records returned responsive to the second synchronization request are deleted. Merging of the server synchronization key is also carried out. An informational request is then sent, indicated by the segment 112, for informational parts of the non-redundant data records within the second synchronization depth. The requested information is obtained, indicated by the block 114 and returned, indicated by the segment 118, to the device 16. Once received, synchronization is performed, indicated by the block 122.

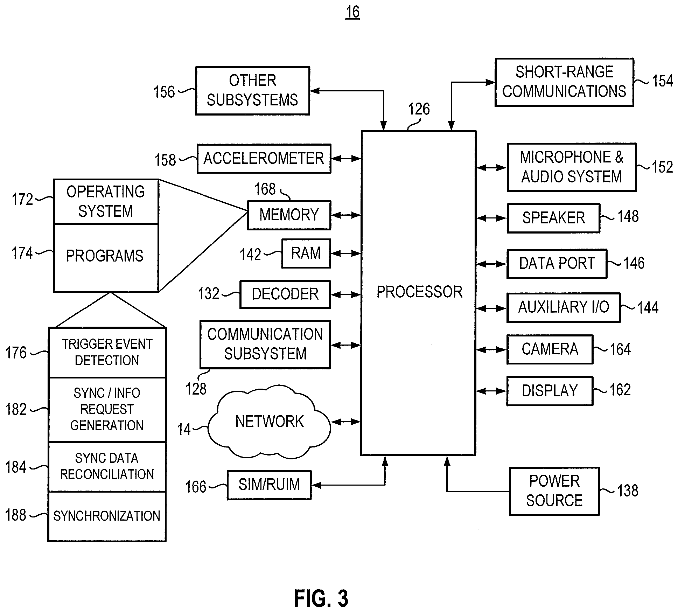

Figure 3 illustrates an exemplary device 16 of an implementation of the present disclosure. In the exemplary implementation, the device 16 forms a multifunctional, wireless device having data communication capability. The device 16 is here shown to include a processor 126 that controls overall operation of the device 16. The processor controls, for instance, voice, data, and command communications, which are implemented by a communication subsystem 128. The communication subsystem 128 includes radio transceiver elements, such as radio receiver and radio transceiver elements. The communication subsystem 128 is used, amongst other things, to initiate and to support an active voice call or data communication session. The elements of the communication subsystem are formed of any of various combinations of hardware, software, and firmware to perform various designated functions. The software is functionally, or conceptually, divided into software modules. Software in one module is able to share or to call upon functions of another module during operations.

When the device 16 is operated pursuant to a communication service, the data received at the device is processed by a decoder 132. The decoder performs decompression and decrypting operations. The device 16 receives information from, and sends information to, the network 14. The network 14 is of any of various types of networks including a data network, a cellular network, a wireless data network, wireless voice network, and a network that supports both voice and data communications. The network 14 uses any of a variety of formats and protocols that permit the communication of data.

A power source 138 provides operative power to the elements of the device 16 to permit the various functions of the device to be carried out. The power source 138 comprises a battery, or other portable, power supply and provides a port to permit connection to an external power supply.

The processor 126 also interacts with other elements of the device 16. For instance, the processor interacts with a random access memory (RAM) 142, an auxiliary input/output (I/O) subsystem 144, a data port 146, a speaker 148, a microphone and audio system 152, a short-range communication system 154, and other subsystems 156, an accelerometer 158, a display 162, and a camera module 164.

The processor 126 further interacts with the subscriber identity module or removable user identity module (SIM/RUIM) 166. Identification information is alternately stored at an internal memory of the device, such as the memory 168. The device 16 further includes an operating system 172 and other software programs 174, which are formed of program code. The operating system 172 and the software programs 174 are executed by the processor 126 during operation of the device 16. The software programs include software modules, here including trigger event detection module 176, a synchronization request and information request generation module 182, a synchronization module data reconciliation module 184, and a synchronization module 188.

During operation, the trigger event detection module is invoked to detect a trigger event, the synchronization format generation module 182 is invoked to generate synchronization requests and to generate informational requests, the synchronization data reconciliation module is invoked to reconcile synchronization data returned responsive to transmitted synchronization requests, and the synchronization module is invoked to perform synchronization operations. Operations performed by the various modules 176-188 are used to perform the operations described with respect to Figures 1-2.

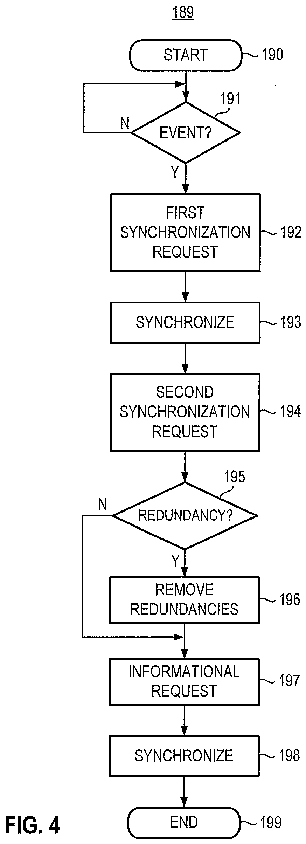

Figure 4 illustrates a process diagram 189 representative of exemplary operation of an implementation of the present disclosure. Subsequent to entry into the process, indicated by the block 190, a determination is made at the decision block 191 as to whether a triggering event has occurred. If not, the no branch is taken back to the decision block. Conversely, if a triggering event has been detected, such as user entry of a user identifier and a password, the yes branch is taken to the block 192.

A first synchronization request is generated and sent, indicated by the block 192. Synchronization data is provided in response to the first synchronization request. As described previously, in the exemplary implementation, the first synchronization request is a request for synchronization data of a first synchronization depth and for both identifying and informational parts of each data record within the window or range defined by the synchronization depth. Synchronization is performed, indicated by the block 193, upon the returned synchronization data.

A second synchronization request is generated and sent, indicated by the block 194. Also as noted previously, in the exemplary implementation, the second synchronization request includes a request for a second synchronization depth and for identifying parts of the data records within a range defined by the second synchronization depth. The second synchronization depth is greater than the first synchronization depth.

When synchronization data is provided in response to the second synchronization request, a determination is made, indicated at the decision block 195, as to whether, for each data record, the data record is redundant with a data record earlier-provided. Redundant data records are deleted, indicated by the block 196 to which the yes branch from the decision block 195 extends. Data records that are not redundant are not deleted, and the no branch extending from the decision block 195 is representative of determined non-redundancy.

Then, and as indicated by the block 197, an informational request is generated and sent to request informational parts of the non-redundant data records requested in the second synchronization request. The informational parts are returned and synchronized, indicated at the block 198. The process ends at the end block 199.

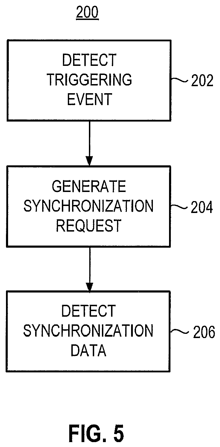

Figure 5 illustrates a method flow diagram 200 representative of the method of operation of an implementation of the present disclosure. The method facilitates synchronization of a device database.

First, and as indicated by the block 202, detection is made of a triggering event. And as indicated by the block 204, a synchronization request is generated that includes a stage-length value. Then, and as indicated by the block 206, synchronization data is detected. The synchronization data is provided in a first stage of a stage-length responsive to the stage-length value and at least a second stage of a second stage-length.

Thereby, synchronization data is provided to synchronize a database in an ordered manner that facilitates quick availability of data records that are most likely to be needed by a user of a device.

Presently preferred implementations of the disclosure and many improvements and advantages thereof have been described with a degree of particularity. The description is of preferred examples of implementing the disclosure, and the description of examples is not necessarily intended to limit the scope of the disclosure. The scope of the disclosure is defined by the following claims.

## Claims

1. A device (16) having a database, said device comprising:
a processor (126) configured to:
generate and send a first synchronization request (192) for synchronization data of a first synchronization depth and for both identifying parts and informational parts of each data record within a range defined by the first synchronization depth;
detect synchronization data (193) and synchronize in response to the first synchronization request;
generate and send a second synchronization request (194) for synchronization data of a second synchronization depth and for identifying parts of the data records within a range defined by the second synchronization depth, wherein the second synchronization depth is greater than the first synchronization depth;
detect synchronization data (195) provided responsive to the second synchronization request; and
generate and send an informational request (197) to request informational parts of non-redundant data records requested in the second synchronization request; and
detect returned informational parts (198) of the non-redundant data records requested in the second synchronization request.

2. The device (16) of claim 1 wherein the processor (126) is further configured to reconcile the detected synchronization data to remove redundancies of the synchronization data provided responsive to the first synchronization request and the second synchronization request.

3. The device (16) of claim 1 or claim 2, wherein, in response to detecting the synchronization data provided responsive to the second synchronization request, the processor is further configured to,:
determine (195) whether, for each data record, the data record is redundant with a data record provided earlier; and
delete (196) the data records determined to be redundant.

4. The device (16) of claim 1 wherein said processor (126) is further configured to synchronize database data using the synchronization data.

5. A method (189) for facilitating synchronization of a device database, said method comprising:
generating and sending a first (192) synchronization request for synchronization data of a first synchronization depth and for both identifying parts and informational parts of each data record within a range defined by the first synchronization depth; and
detecting (193) synchronization data and synchronizing in response to the first synchronization request;
generating and sending a second synchronization request (194) for synchronization data of a second synchronization depth and for identifying parts of the data records within a range defined by the second synchronization depth, wherein the second synchronization depth is greater than the first synchronization depth; detecting synchronization data provided responsive to the second synchronization request; and
generating and sending an informational request (197) to request informational parts of non-redundant data records requested in the second synchronization request; and
detecting (198) the returned informational parts of the non-redundant data records.

6. The method (189) of claim 5, wherein the first synchronization depth and the second synchronization depth include overlapping portions.

7. The method (189) of claim 5 further comprising receiving selection to generate the synchronization request, wherein said generating the first synchronization request is responsive to receiving the selection, and wherein said generating the second synchronization request is performed automatically subsequent to generation of the first synchronization request.

8. The method (189) of claim 7 further comprising reconciling the synchronization data detected responsive to the first synchronization request and the synchronization data detected responsive to the second synchronization request to remove redundancies therefrom.

9. The method (189) of claim 5, wherein, in response to detecting the synchronization data provided responsive to the second synchronization request:
determining (195) whether, for each data record, the data record is redundant with a data record provided earlier; and
deleting (196) the data records determined to be redundant.

10. The method (189) of claim 5 wherein the first and second synchronization requests are generated responsive to a trigger.

11. The method (189) of claim 5 wherein first and second synchronization requests include routing information that permits routing of the first and second synchronization requests to a location.

12. The method (189) of claim 5 wherein the first and second synchronization requests include an identification of a part of a database that is to be synchronized.

13. The method (189) of claim 5 further comprising reconciling the synchronization data received responsive to the first synchronization request with the synchronization data received responsive to the second synchronization request.

14. The method (189) of claim 13 wherein the reconciling includes removing redundant data records of the synchronization data received responsive to the second synchronization request.

## Patentansprüche

1. Vorrichtung (16) mit einer Datenbank, wobei die Vorrichtung Folgendes umfasst:
einen Prozessor (126), ausgelegt zum
Erzeugen und Senden einer ersten Synchronisationsanforderung (192) von Synchronisationsdaten einer ersten Synchronisationstiefe und sowohl von Identifizierungsteilen als auch Informations-Teilen jedes Datensatzes in einem durch die erste Synchronisationstiefe definierten Bereich;
Detektieren von Synchronisationsdaten (193) und Synchronisieren als Reaktion auf die erste Synchronisationsanforderung;
Erzeugen und Senden einer zweiten Synchronisationsanforderung (194) von Synchronisationsdaten einer zweiten Synchronisationstiefe und von Identifizierungsteilen der Datensätze in einem durch die zweite Synchronisationstiefe definierten Bereich, wobei die zweite Synchronisationstiefe größer als die erste Synchronisationstiefe ist;
Detektieren von als Reaktion auf die zweite Synchronisationsanforderung bereitgestellten Synchronisationsdaten (195); und
Erzeugen und Senden einer Informations-Anforderung (197) zum Anfordern von Informations-Teilen nichtredundanter Datensätze, die in der zweiten Synchronisationsanforderung angefordert werden; und
Detektieren von zurückgegebenen Informations-Teilen (198) der nichtredundanten Datensätze, die in der zweiten Synchronisationsanforderung angefordert werden.

2. Vorrichtung (16) nach Anspruch 1, wobei der Prozessor (126) ferner ausgelegt ist zum Abstimmen der detektierten Synchronisationsdaten, um Redundanzen der Synchronisationsdaten zu entfernen, die als Reaktion auf die erste Synchronisationsanforderung und die zweite Synchronisationsanforderung bereitgestellt werden.

3. Vorrichtung (16) nach Anspruch 1 oder 2, wobei als Reaktion auf Detektieren der als Reaktion auf die zweite Synchronisationsanforderung bereitgestellten Synchronisationsdaten der Prozessor ferner ausgelegt ist zum
Bestimmen (195), ob für jeden Datensatz der Datensatz mit einem früher bereitgestellten Datensatz redundant ist; und
Löschen (196) der als redundant bestimmten Datensätze.

4. Vorrichtung (16) nach Anspruch 1, wobei der Prozessor (126) ferner ausgelegt ist zum Synchronisieren von Datenbankdaten unter Verwendung der Synchronisationsdaten.

5. Verfahren (189) zur Ermöglichung der Synchronisation einer Vorrichtungsdatenbank, wobei das Verfahren Folgendes umfasst:
Erzeugen und Senden einer ersten Synchronisationsanforderung (192) von Synchronisationsdaten einer ersten Synchronisationstiefe und sowohl von Identifizierungsteilen als auch Informations-Teilen jedes Datensatzes in einem durch die erste Synchronisationstiefe definierten Bereich; und
Detektieren (193) von Synchronisationsdaten und Synchronisieren als Reaktion auf die erste Synchronisationsanforderung;
Erzeugen und Senden einer zweiten Synchronisationsanforderung (194) von Synchronisationsdaten einer zweiten Synchronisationstiefe und von Identifizierungsteilen der Datensätze in einem durch die zweite Synchronisationstiefe definierten Bereich, wobei die zweite Synchronisationstiefe größer als die erste Synchronisationstiefe ist;
Detektieren von als Reaktion auf die zweite Synchronisationsanforderung bereitgestellten Synchronisationsdaten; und
Erzeugen und Senden einer Informations-Anforderung (197) zum Anfordern von Informations-Teilen nichtredundanter Datensätze, die in der zweiten Synchronisationsanforderung angefordert werden; und
Detektieren von zurückgegebenen Informations-Teilen (198) der nichtredundanten Datensätze.

6. Verfahren (189) nach Anspruch 5, wobei die erste Synchronisationstiefe und die zweite Synchronisationstiefe sich überlappende Teile umfassen.

7. Verfahren (189) nach Anspruch 5, das ferner Empfangen einer Auswahl zur Erzeugung der Synchronisationsanforderung umfasst, wobei das Erzeugen der ersten Synchronisationsanforderung als Reaktion auf Empfang der Auswahl erfolgt und wobei das Erzeugen der zweiten Synchronisationsanforderung automatisch nach der Erzeugung der ersten Synchronisationsanforderung durchgeführt wird.

8. Verfahren (189) nach Anspruch 7, das ferner Abstimmen der als Reaktion auf die erste Synchronisationsanforderung detektierten Synchronisationsdaten und der als Reaktion auf die zweite Synchronisationsanforderung detektierten Synchronisationsdaten zur Entfernung von Redundanzen aus diesen umfasst.

9. Verfahren (189) nach Anspruch 5, wobei als Reaktion auf Detektieren der als Reaktion auf die zweite Synchronisationsanforderung bereitgestellten Synchronisationsdaten
bestimmt wird (195), ob für jeden Datensatz der Datensatz mit einem früher bereitgestellten Datensatz redundant ist; und
die als redundant bestimmten Datensätze gelöscht werden (196).

10. Verfahren (189) nach Anspruch 5, wobei die erste und zweite Synchronisationsanforderung als Reaktion auf einen Trigger erzeugt werden.

11. Verfahren (189) nach Anspruch 5, wobei die erste und zweite Synchronisationsanforderung Routinginformationen umfassen, die Routen der ersten und zweiten Synchronisationsanforderung zu einem Ort gestatten.

12. Verfahren (189) nach Anspruch 5, wobei die erste und zweite Synchronisationsanforderung eine Identifikation eines Teils einer Datenbank, die zu synchronisieren ist, umfassen.

13. Verfahren (189) nach Anspruch 5, das ferner Abstimmen der als Reaktion auf die erste Synchronisationsanforderung empfangenen Synchronisationsdaten mit den als Reaktion auf die zweite Synchronisationsanforderung empfangenen Synchronisationsdaten umfasst.

14. Verfahren (189) nach Anspruch 13, wobei das Abstimmen Entfernen redundanter Datensätze der als Reaktion auf die zweite Synchronisationsanforderung empfangenen Synchronisationsdaten umfasst.

## Revendications

1. Dispositif (16) comportant une base de données, ledit dispositif comprenant :
un processeur (126) configuré pour :
produire et envoyer une première demande de synchronisation (192) pour des données de synchronisation d'une première profondeur de synchronisation et pour identifier à la fois des parties et des parties informationnelles de chaque enregistrement de données dans une plage définie par la première profondeur de synchronisation ;
détecter des données de synchronisation (193) et synchroniser en réponse à la première demande de synchronisation ;
produire et envoyer une deuxième demande de synchronisation (194) pour des données de synchronisation d'une deuxième profondeur de synchronisation et pour identifier des parties des enregistrements de données dans une plage définie par la deuxième profondeur de synchronisation, la deuxième profondeur de synchronisation étant supérieure à la première profondeur de synchronisation ;
détecter des données de synchronisation (195) fournies en réponse à la deuxième demande de synchronisation ; et
produire et envoyer une demande informationnelle (197) pour demander des parties informationnelles d'enregistrements de données non redondants demandés dans la deuxième demande de synchronisation ; et
détecter des parties informationnelles (198) retournées des enregistrements de données non redondants demandés dans la deuxième demande de synchronisation.

2. Dispositif (16) selon la revendication 1, dans lequel le processeur (126) est, en outre, configuré pour rapprocher les données de synchronisation détectées afin d'éliminer les redondances des données de synchronisation fournies en réponse à la première demande de synchronisation et à la deuxième demande de synchronisation.

3. Dispositif (16) selon la revendication 1 ou la revendication 2, dans lequel, en réponse à la détection des données de synchronisation fournies en réponse à la deuxième demande de synchronisation, le processeur est, en outre, configuré pour :
déterminer (195) si, pour chaque enregistrement de données, l'enregistrement de données est redondant avec un enregistrement de données fourni précédemment ; et
supprimer (196) les enregistrements de données déterminés comme étant redondants.

4. Dispositif (16) selon la revendication 1, dans lequel ledit processeur (126) est, en outre, configuré pour synchroniser les données de base de données en utilisant les données de synchronisation.

5. Procédé (189) pour faciliter la synchronisation d'une base de données de dispositif, ledit procédé consistant à :
produire et envoyer une première demande de synchronisation (192) pour des données de synchronisation d'une première profondeur de synchronisation et pour identifier à la fois des parties et des parties informationnelles de chaque enregistrement de données dans une plage définie par la première profondeur de synchronisation ; et
détecter (193) des données de synchronisation et synchroniser en réponse à la première demande de synchronisation ;
produire et envoyer une deuxième demande de synchronisation (194) pour des données de synchronisation d'une deuxième profondeur de synchronisation et pour identifier des parties des enregistrements de données dans une plage définie par la deuxième profondeur de synchronisation, la deuxième profondeur de synchronisation étant supérieure à la première profondeur de synchronisation ;
détecter des données de synchronisation fournies en réponse à la deuxième demande de synchronisation ; et
produire et envoyer une demande informationnelle (197) pour demander des parties informationnelles d'enregistrements de données non redondants demandés dans la deuxième demande de synchronisation ; et
détecter (198) les parties informationnelles retournées des enregistrements de données non redondants.

6. Procédé (189) selon la revendication 5, dans lequel la première profondeur de synchronisation et la deuxième profondeur de synchronisation comprennent des portions qui se chevauchent.

7. Procédé (189) selon la revendication 5, comprenant, en outre, la réception de la sélection pour produire la demande de synchronisation, ladite production de la première demande de synchronisation répondant à la réception de la sélection, et ladite production de la deuxième demande de synchronisation étant réalisée automatiquement après la production de la première demande de synchronisation.

8. Procédé (189) selon la revendication 7, comprenant, en outre, la rapprochement des données de synchronisation détectées en réponse à la première demande de synchronisation et des données de synchronisation détectées en réponse à la deuxième demande de synchronisation pour en éliminer les redondances.

9. Procédé (189) selon la revendication 5, dans lequel, en réponse à la détection des données de synchronisation fournies en réponse à la deuxième demande de synchronisation :
déterminer (195) si, pour chaque enregistrement de données, l'enregistrement de données est redondant avec un enregistrement de données fourni précédemment ; et
supprimer (196) les enregistrements de données déterminés comme étant redondants.

10. Procédé (189) selon la revendication 5, dans lequel les première et deuxième demandes de synchronisation sont produites en réponse à un déclencheur.

11. Procédé (189) selon la revendication 5, dans lequel les première et deuxième demandes de synchronisation comprennent des informations d'acheminement qui permettent d'acheminer les première et deuxième demandes de synchronisation jusqu'à un emplacement.

12. Procédé (189) selon la revendication 5, dans lequel les première et deuxième demandes de synchronisation comprennent une identification d'une partie d'une base de données qui doit être synchronisée.

13. Procédé (189) selon la revendication 5, comprenant, en outre, le rapprochement des données de synchronisation reçues en réponse à la première demande de synchronisation avec les données de synchronisation reçues en réponse à la deuxième demande de synchronisation.

14. Procédé (189) selon la revendication 13, dans lequel le rapprochement comprend l'élimination des enregistrements de données redondants des données de synchronisation reçues en réponse à la deuxième demande de synchronisation.
